# EUROPÄISCHE PATENTSCHRIFT

(11) **EP 0 304 658 B1**
(45) Veröffentlichungstag und Bekanntmachung des Hinweises auf die Patenterteilung: **19.05.1993**
(21) Anmeldenummer: 88112185.9
(22) Anmeldetag: 28.07.1988
(51) Int. Cl.: A01D 34/46, A01D 34/57

(54) **Rasenmäher**
Lawn mower
Tondeuse à gazon

(30) Priorität: 22.08.1987 DE 3728060
(43) Veröffentlichungstag der Anmeldung: 01.03.1989
(73) Patentinhaber: BRILL PRODUKTIONS GMBH, D-58456 Witten (DE)
(72) Erfinder:
(74) Vertreter: Patentanwälte Ruff, Beier, Schöndorf und Mütschele

(56) Entgegenhaltungen:
- DE-A- 2 011 218
- DE-C- 631 220
- FR-A- 851 769

## Beschreibung

Die Erfindung betrifft einen Rasenmäher nach dem Oberbegriff des Patentanspruches 1.

Die Mähwelle ist z.B. gemäß der FR-A-851 769 bei einem motorlosen, durch Schieben von Hand anzutreibenden Rasenmäher zwischen zwei durch Lagerwangen gebildeten Seitenteilen eines Fahrgestelles gelagert, wobei auf der Mähwelle Längsmesser angeordnet sind, die mit einem gegenüber dem Fahrgestell im wesentlichen feststehenden, im Bereich der Unterseite der Mähwelle liegenden Gegenmesser scherend zusammenwirken. Die Längsmesser werden von auf der Mähwelle angeordneten Tragplatten getragen, wobei die Enden der Mähwelle zwischen den äußersten Tragplatten und der jeweils benachbaren Lagerwange auf einem kurzen Abschnitt freiliegen, auf dem sich beim Betrieb des Rasenmähers Pflanzenteile und ähnliches störend aufwickeln können, obwohl hier Lagerschalen liegen. Eine Stirnwand der jeweiligen Lagerschale umgibt diesen Abschnitt, wobei die Lagerschale mit ihrem anderen Ende an der Lagerwange befestigt ist und sich somit mit der Mähwelle nicht mitdreht. Die Stirnwand der Lagerschale liegt, ohne auszukragen, an dem Lageran und unmittelbar benachbart zu einer drehenden Stirnfläche des Mährotors und begrenzt mit dieser einen sehr engen Ringspalt, der das Hineinziehen und Aufwickeln von Gräsern eher fördert als verhindert, weil einmal in den Ringspalt gelangte Gräser axial nach keiner Richtung mehr ausweichen können.

Der Erfindung liegt auch die Aufgabe zugrunde, einen Rasenmäher der genannten Art zu schaffen, bei welchem eine genaue Ausrichtung zwischen Schutzmantel und Wellenlager und eine vereinfachte Herstellung auf einfache Weise erreicht werden kann.

Zur Lösung dieser Aufgabe sind die Merkmale des Patentanspruches 1 vorgesehen. Der Aufwickel-Schutzmantel ist gegenüber der Lagerwange im wesentlichen feststehend angeordnet, ragt jedoch axial frei fliegend über die Wellenlagerung aus, d.h. nach Art eines freien kragarms bzw. einer fliegenden lagerung. Die Lagerwange trägt ein an einer Lagerhalterung angeordnetes Wellenlager für die Mähwelle, wobei die Lagerhalterung wenigstens teilweise durch den Schutzmantel gebildet ist. Der Schutzmantel könnte auch durch eine Schweißverbindung im Abstand vom Wellenlager an der Lagerwange befestigt sein, jedoch wäre dann die Montage des Schutzmantels verhältnismäßig umständlich und seine koaxiale Ausrichtung gegenüber dem Wellenlager schwierig. Außerdem wäre eine lösbare Anordnung des Schutzmantels und auch die Zugänglichkeit des Wellenlagers im Falle einer Reparatur erschwert. Der Schutzmantel weist zweckmäßig einen mit der Lagerhalterung in Eingriff stehenden bzw. verbundenen Teil auf, so daß auf einfache Weise eine sehr genaue gegenseitige Ausrichtung erzielt wird. Wird der Schutzmantel dabei im wesentlichen ausschließlich durch seine Verbindung mit der Lagerhalterung getragen, so wird auch eine wesentlich vereinfachte Fertigung erreicht, da auf gesonderte Befestigungen des Schutzmantels und der Lagerhalterung verzichtet werden kann.

Eine besonders vorteilhafte Ausbildung des Erfindungsgegenstandes besteht darin, den Schutzmantel statt, wie auch denkbar, als nachträglich mit der Lagerhalterung zu verbindenden gesonderten Bauteil, einteilig mit der Lagerhalterung, insbesondere als muffenförmigen, tiefgezogenen Blechteil auszubilden, so daß ein Bauteil weniger als bisher benötigt wird. Der Schutzmantel und die Lagerhalterung schließen zweckmäßig in Achsrichtung unmittelbar aneinander an, wobei die Lagerhalterung wesentlich kürzer als der Schutzmantel ist.

In weiterer Ausgestaltung der Erfindung ist der Schutzmantel im Bereich der Lagerhalterung als ringnapfförmige Halterungsschale ausgebildet, in welche das beispielsweise durch ein Wälzlager, insbesondere ein Kugellager, gebildete Axial-und Radiallager in einfacher Weise eingesetzt werden kann. Die Länge der Halterungsschale entspricht zweckmäßig im wesentlichen der Axialerstreckung des Wellenlagers bzw. eines Bundes der Mähwelle, welcher die innere Lauffläche des Wellenlagers bildet.

Um eine möglichst kurze Bauweise zu erzielen, ist die Lagerhalterung durch einen Endabschnitt des vorzugsweise napfförmigen Schutzmantels gebildet, so daß keine, auch denkbaren, Teile der durch Schutzmantel und Lagerhalterung gebildeten Baueinheit vorgesehen sind, welche über die vom Schutzmantel abgekehrte Stirnseite der Lagerhalterung vorstehen.

Es ist denkbar, den genannten Bauteil über die Länge des Schutzmantels und der Lagerhalterung mit im wesentlichen konstanten Querschnitten auszubilden, jedoch ergibt sich eine wesentlich kompaktere Bauweise, wenn der Schutzmantel im Bereich der Lagerhalterung einen reduzierten Durchmesser aufweist und vorzugsweise in die Lagerhalterung über eine Ringschulter übergeht, wodurch auch die Montage wesentlich vereinfacht werden kann.

Zur Erzielung einer sehr einfachen Montage kann zum Beispiel der Schutzmantel bzw. die Lagerhalterung de Lagerwange im Bereich einer Öffnung durchsetzen und vorzugsweise mit Preßsitz in diese Öffnung eingreifen, so daß eine relativ leicht lösbare Befestigung sowohl des Schutzmantels als auch der Lagerhalterung gegeben ist.

Um die Axiallage des Schutzmantels bzw. der Lagerhalterung in einfacher Weise genau festlegen sowie sichern zu können, weist der genannte Bauteil einen Anschlag für die Anlage an der Lagerwange auf, wobei dieser Anschlag in einfacher Weise durch die Ringschulter gebildet sein und an der Innenseite der Lagerwange beispielsweise in einer napfförmigen Vertiefung anliegen kann.

Damit der Schutzmantel aus verhältnismäßig dünnem Blech von beispielsweise weniger als einem Millimeter Blechdicke hergestellt werden kann und trotzdem eine gegenüber dem Schutzmantel höhere Festigkeit der Lagerschale gewährleistet ist, kann die Lagerschale mit mindestens einer Versteifung versehen sein. Diese zweckmäßig kappenartig mit der Lagerhalterung zusammengesteckte Versteifung kann in einfacher Weise unmittelbar durch einen äußeren Lagerring des Wellenlagers gebildet sein, der zweckmäßig mit Preßsitz und somit im wesentlichen ganzflächig anliegend in die Lagerhalterung eingesetzt ist, so daß die äußere Lauffläche des Wellenlagers nicht, wie auch denkbar, unmittelbar an der Lagerhalterung, sondern an diesem äußeren Lagerring vorgesehen ist. Die Ringschulter zwischen Schutzmantel und Lagerhalterung kann mit ihrer Innenfläche auch nach Art eines Anschlages eine axiale Lagersicherung für das Wellenlager bilden. Auf der anderen Seite ist durch diese Ausbildung der äußere, insbesondere ebenfalls als tiefgezogener Blechteil ausgebildete Lagerring in die Lagerhalterung bzw. über diese in die Öffnung der Lagerwange eingespannt, wodurch das sich im Betrieb vergrößernde Laufspiel des Wellenlagers in Grenzen gehalten werden kann.

Eine besonders sichere Verbindung des Schutzmantels mit der Lagerwange einerseits bzw. des äußeren Lagerringes mit der Lagerhalterung andererseits bei großen Fertigungstoleranzen wird gewährleistet, wenn der Schutzmantel im Bereich der Lagerhalterung am Außenumfang, am Innenumfang oder an beiden Umfängen in Umfangsrichtung gewellt ist, wobei insbesondere der Blechmantel im Querschnitt einen wellenförmigen Verlauf aufweisen kann, so daß die nach außen gerichteten Wellenscheitel für den geringfügig elastisch nachgiebigen Eingriff in die Öffnung der Lagerwange und die inneren Wellenscheitel für einen entsprechenden Eingriff am Außenumfang des Wellenlagers geeignet sind. Der Mantel der Lagerhalterung wirkt somit nach Art eines Toleranzausgleichsringes.

Durch die erfindungsgemäße Ausbildung kann der Schutzmantel in einfacher Weise mit dem Wellenlager eine vormontierte Baueinheit bilden, wobei das Wellenlager bzw. dessen äußerer Lagerring zweckmäßig in die Lagerhalterung eingepreßt ist und diese Baueinheit als Ganzes an der Lagerwange in einfacher Weise montiert werden kann.

Diese und weiters Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Ein Ausführungsbeispiel der Erfindung ist in den Zeichnugen dargestellt und wird im folgenden näher erläutert. In den Zeichnungen zeigen:
- Fig. 1: einen Teil eines erfindungsgemäßen Rasenmähers im Vertikalschnitt;
- Fig. 2: den Rasenmäher gemäß Fig. 1 in teilweise geschnittener Draufsicht;
- Fig. 3: einen Ausschnitt der Fig. 2 in vergrößerter Darstellung;
- Fig. 4: einen Schutzmantel in teilweise geschnittener Ansicht und vergrößerter Darstellung;
- Fig. 5: einen Schnitt nach der Linie V-V in Fig. 4.

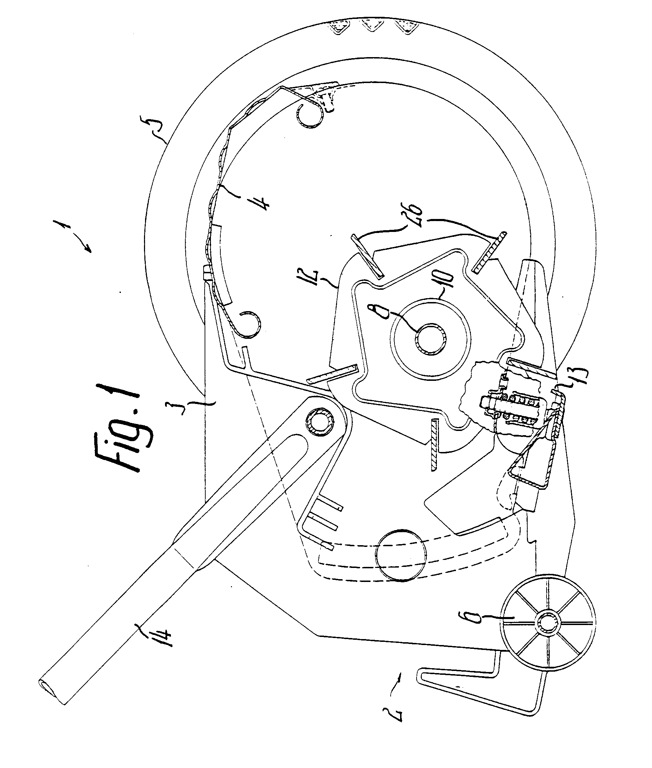

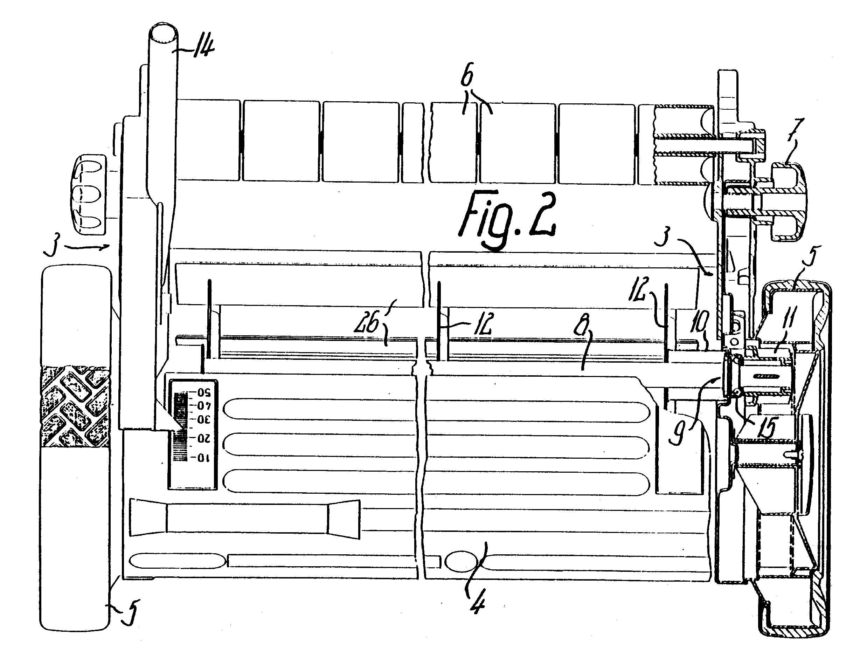

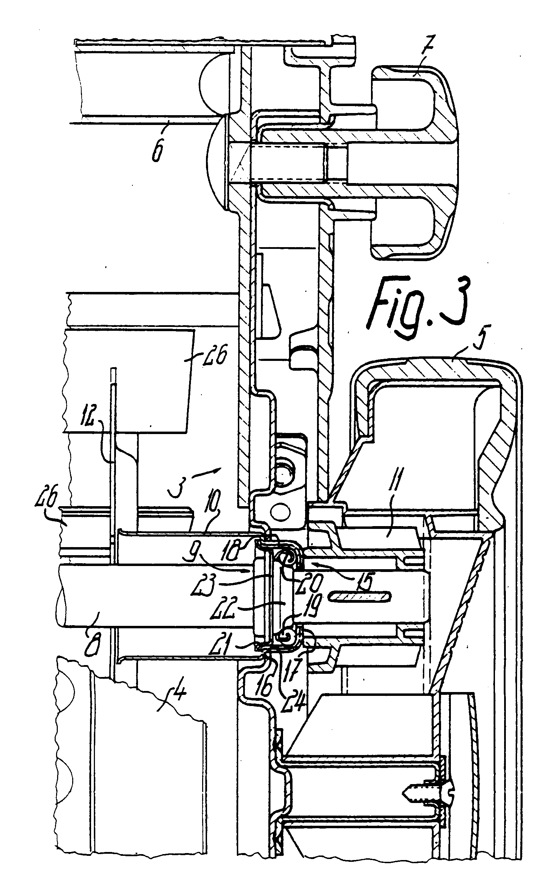

Wie die Fig. 1 bis 3 zeigen, weist ein erfindungsgemäßer Hand-Rasenmäher 1 ein im wesentlichen aus zwei seitlichen und untereinander starr beispielsweise über eine Haube 4 verbundenen Lagerwangen 3 bestehendes Fahrgestell 2 mit zwei äußeren, über die gesamte Höhe des Fahrgestelles reichenden achsgleichen Laufrädern 5 und einer in Fahrtrichtung dahinter liegenden Anordnung von Stützrollen 6 auf, die wesentlich kleineren Durchmesser haben und parallel zur Laufradachse in einer Reihe nebeneinander angeordnet sind. Zur Höhenverstellung dieser Stützrollen 6 gegenüber einer zwischen den Lagerwangen 3 in Wellenlagern 9 gelagerten Mähwelle 8 sind seitlich außen an den Lagerwangen 3 zwei achsgleiche Klemmschrauben 7 vorgesehen.

Die Enden der Mähwelle 8 durchsetzen die Seitenwangen 3 bis ins Innere der Laufräder 5, wobei diese Enden jeweils auf einem von der zugehörigen Lagerwange 3 nach innen reichenden Abschnitt von einem Aufwickel-Schutzmantel 10 umgeben sind. Die aus den beiden Schutzmänteln 10 nach außen in das jeweilige Laufrad 5 vorstehenden Endabschnitte der Mähwelle 8 sind jeweils mit einem Zahnritzel 11 versehen, das in einen entsprechenden Innen-Zahnkranz des zugehörigen Laufrades 5 kämmend eingreift. Die Mähwelle 8 weist über ihre Länge verteilte, über ihren Außenumfang vorstehende Tragscheiben 12 auf, in die im Umfang Längsmesser 26 eingesetzt sind, welche mit ihren Enden über die beiden äußersten Tragscheiben 7 bis nahe an die Lagerwangen 3 vorstehen und somit die Schutzmäntel 10 mit diesen Enden umlaufen. Jeder der beiden fliegend bzw. berührungsfrei vorstehenden Schutzmäntel 10 reicht mit seinem Ende bis nahe an die benachbarte äußerste Tragscheibe 12, so daß der zugehörige, zwischen der Innenseite der Lagerwange 3 und dieser Tragscheibe 12 liegende Abschnitt der Mähwelle 8 keine Gegenstände erfassen und ggf. aufwickeln kann und somit am Umfang vollständig abgeschirmt ist. Der Innendurchmesser des jeweiligen Schutzmantels 10 ist wesentlich größer als der Außendurchmesser des zugehörigen Abschnittes der Mähwelle 8, beispielsweise doppelt so groß.

Außer der die Mähwelle 8 einschließlich der Längsmesser 26 an der Ober- und Vorderseite abdeckenden Blechhaube 4 dient noch eine an der Unterseite der Lagerwangen 3 liegende, nach Art eines Hohlprofiles ausgebildete Halterung für ein Gegenmesser 13 zur starren Verbindung der beiden Lagerwangen 3, wobei diese Halterung hinter der Mähwelle 8 so liegt, daß die Längsmesser 26 nach Art von Schermessern an dem Gegenmesser 13 vorbeilaufen. Die Lagerwangen 3 weisen nach hinten über den Außenumfang der Laufräder 5 vorstehende Verlängerungen auf, an welchen die Gegenmesser-Halterung und die Lagerachse für die Stützrollen 6 befestigt sind. Oberhalb des Gegenmessers 13 bzw. der Mähwelle 8 und ebenfalls hinter dieser ist an den Verlängerungen der Lagerwangen 3 ein bügelförmiger Schiebegriff 14 mit seinen Schenkeln angelenkt, mit welchem der Rasenmäher 1 für den Betrieb von Hand vorwärtsgeschoben wird.

Die jeweilige Lagerwange 3 weist einen aus Blech geformten, profilierten Teil auf, der einen kreistopfförmigen, an der Innenseite der zugehörigen Laufrolle 5 liegenden Abschnitt und eine nach hinten gerichtete Verlängerung bildet, welche von einem die Stützrollen tragenden, gehäuseförmigen Teil aufgenommen ist. In der Mittelachse des kreisnapfförmigen Teiles ist das jeweilige Laufrad 5 mit einem über diesen Teil nach außen vorstehenden, beispielsweise als Gleitlager ausgebildeten Radlager gelagert.

Hinter und unterhalb der Laufradachse sowie parallel zu dieser ist die Mähwelle mit den Wellenlagern 9 in den kreisnapfförmigen Abschnitten gelagert, wobei jedes Wellenlager 9 mit einer Lagerhalterung 15 an diesem Teil der Lagerwange 3 befestigt ist. Die napfförmige und einen ringförmig ebenen Boden 17 aufweisende Lagerhalterung 15 geht mit ihrem im wesentlichen zylindrischen Mantel über eine Ringschulter 16 in den im wesentlichen zylindrischen Schutzmantel 10 einteilig über. In die mit ihrem Boden 17 dem Laufrad 5 zugekehrte Lagerhalterung 15 ist mit Preßsitz ein äußerer, ähnlich wie die Lagerhalterung 15 napfförmig ausgebildeter Lagerring derart eingesetzt, daß er mit der Außenseite seines ringscheibenförmigen Bodens am Boden 17 anschlägt und mit einem am anderen Ende liegenden, nach außen vorstehenden bzw. gebördelten Ringbund an der Innenseite der Ringschulter 16 anliegt.

In der im Axialschnitt etwa viertelkreisförmig konkav ausgerundeten Übergangsfläche zwischen dem Mantel und dem Boden bildet der äußere Lagerring 18 eine äußere Lauffläche für einen Kranz von Wälzkörpern 19 in Form von Kugeln, die in einem Käfig 20 gesichert sind. In die dem Boden gegenüberliegende offene Seite des äußeren Lagerringes 18 ist ein wie dieser aus Blech bestehender Ringdeckel 21 eingesetzt bzw. eingepreßt, der mit einem nach außen gerichteten Ringbund am Ringbund des Lagerringes 18 anliegt und mit einem innerhalb diesem liegenden und nach innen gerichteten Ringbund versehen ist.

Benachbart zum Ritzel 11 ist auf dem zugehörigen Ende der Mähwelle 8 ein profilierter, im Außendurchmesser erweiterter Abschnitt vorgesehen, der die innere Lauffläche 22 für die Wälzkörper 19 und einen gegenüber dieser erweiterten, scheibenförmigen Ringbund 23 bildet, welcher auf der von den Wälzkörpern 19 abgekehrten Seite des inneren Ringbundes des Ringdeckels 21 und mit geringem Abstand zu diesem innerhalb der Lagerhalterung 15 liegt.

Der Kreisnapfförmige Teil der Lagerwange 3 weist an seiner Innenseite eine napfförmige Vertiefung bzw. Ausformung auf, in deren Boden eine kreisrunde Öffnung 24 in Form eines Durchbruches vorgesehen ist, in welche der Außenumfang des Mantels der Lagerhalterung 15 so mit Preßsitz eingesetzt ist, daß die Außenseite der Ringschulter 16 benachbart zur Öffnung 24 am Boden der Vertiefung anliegt und somit der Schutzmantel 10 mit einem kleinen Teil seiner Länge in diese Vertiefung eingreift. Das Ritzel 11 reicht mit seiner Nabe nahezu bis an den Boden der Lagerhalterung 15, die nur mit einem kleinen, an die Ringschulter 16 anschließenden Teil ihrer Länge mit Preßsitz gehalten ist und mit dem übrigen, den Bereich der Wälzkörper 19 einschließenden Teil ihrer Länge über die Außenseite der zugehörigen Blechwandung der Lagerwange 3 frei vorsteht. Die Öffnung im Boden 17 der Lagerhalterung 15 ist verhältnismäßig eng an den zugehörigen Außendurchmesser der Mähwelle 8 angepaßt, während die entsprechende Öffnung im Boden des Lagerringes 18 demgegenüber etwas größer sein kann.

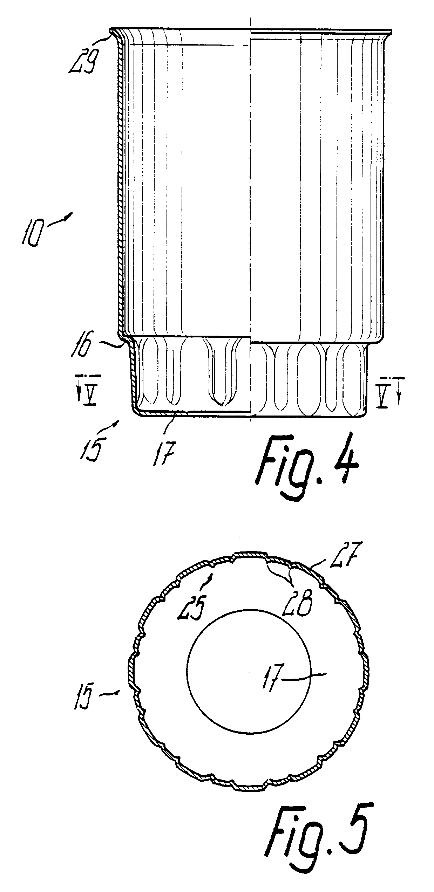

Wie insbesondere die Fig. 4 und 5 zeigen, ist der Mantel der Lagerhalterung 15 über den größten, insbesondere an die Ringschulter 16 anschließenden Teil seiner Länge sowohl am Innenumfang wie auch am Außenumfang in Umfangsrichtung mit einer Profilierung nach Art einer Wellung 25 versehen, die durch entsprechende Verformung des Blechmateriales gebildet ist, so daß Wellenvertiefungen am Außenumfang Wellenerhöhungen am Innenumfang bilden und umgekehrt. Die Wellenerhöhungen 27 am Außenumfang erstrecken sich über größere Bogenwinkel als die Wellenerhöhungen am Innenumfang, wobei die Wellenerhöhungen am Außenumfang über jeweils zwei längskerbartige Vertiefungen derart in die dazwischenliegenden Bereiche übergehen, daß diese am Innenumfang jeweils zwei im Abstand nebeneinanderliegende, längsrippenartige Vorsprünge 28 bilden. Durch die beschriebene Ausbildung kann trotz relativ großer Toleranzen zwischen den ineinander einzusetzenden Teilen ein sicherer Preßsitz sowohl der Lagerhalterung 15 in der Öffnung 24 als auch ein sicherer Preßsitz des Wälzlagers 9 in der Lagerhalterung 15 einerseits durch Verformung der Wellen 25 sowie der Vorsprünge 28 und andererseits durch eine gewisse Durchmesserveränderlichkeit des Mantels des Lagerringes 15 erreicht werden. Der Bogenabstand zwischen benachbarten Wellenerhöhungen 27 kann beispielsweise zwischen 20 und 40°, vorzugsweise etwa 30° betragen, wobei die Wellenerhöhungen 27 zweckmäßig annähernd über ihre gesamte Breite zylindrisch um die Mittelachse des Schutzmantels 10 gekrümmte Außenflächen bilden.

Das von Lagerhalterung 15 abgekehrte Ende des Schutzmantels 10 ist zu einem nach außen gerichteten Ringbund 29 geformt, der mit nur geringstem Spaltabstand von der benachbarten Tragscheibe 12 liegt.

## Patentansprüche

1. Rasenmäher mit mindestens einer Lagerwange (3), einer Mähwelle (8), einer Lagerhalterung (15), einer Wellenlagerung (9) für die Mähwelle (8) und einem die Mähwelle (8) benachbart zur Lagerwange (3) umgebenden Aufwickel-Schutzmantel (10), dadurch gekennzeichnet daß der Schutzmantel (10) durch einen von der Wellenlagerung (9) aus axial frei, fliegend ausragenden, Zwischen sich und der Mähwelle (8) einen radialen Freiraum bildenden Hülsenmantel gebildet ist.

2. Rasenmäher nach Anspruch 1, dadurch gekennzeichnet, daß der Schutzmantel (10) gegenüber der Lagerwange (3) im wesentlichen feststehend sowie die Lagerhalterung (15) an der Lagerwange (3) angeordnet ist, wobei vorzugsweise die Lagerhalterung (15) wenigstens teilweise durch den Schutzmantel (10) gebildet ist und/oder der Mantelabschnitt fliegend von der Lagerhalterung (15) vorsteht.

3. Rasenmäher nach Anspruch 1 oder 2, dadurch gekennzeichnet, daß der Schutzmantel (10) einteilig mit der Lagerhalterung (15), insbesondere als hülsenförmig tiefgezogener Blechteil, ausgebildet und vorzugsweise von Messern (26) der Mähwelle (8) axial übergriffen und/oder am freien Ende seines hülsenförmigen Mantelabschnittes offen ist.

4. Rasenmäher nach einem der vorhergehenden Ansprüche, dadurch gekennzeichnet, daß der Schutzmantel (10) im Bereich der Lagerhalterung (15) als ringnapfförmige Halterungsschale ausgebildet ist, die vorzugsweise durch einen Endabschnitt des insbesondere napfförmigen Schutzmantels (10) gebildet ist.

5. Rasenmäher nach einem der vorhergehenden Ansprüche, daduch gekennzeichnet, daß der Schutzmantel (10) im Bereich der Lagerhalterung (15) einen reduzierten Durchmesser aufweist und insbesondere in die Lagerhalterung (15) über eine schmale Ringschulter (16) übergeht, wobei vorzugsweise der Schutzmantel (10) und die Lagerhalterung (15) in ihrer Axiallage gegenüber der Lagerwange (3) durch einen gemeinsamen Anschlag gesichert sind, der insbesondere durch die Ringschulter (16) gebildet ist und an der Innenseite der Lagerwange (3) anliegt.

6. Rasenmäher nach einem der vorhergehenden Ansprüche, dadurch gekennzeichnet, daß der Schutzmantel (10) bzw. die Lagerhalterung (15) die Lagerwange (3) im Bereich einer Öffnung (24) durchsetzt und insbesondere mit Preßsitz in die Öffnung (24) eingreift, wobei vorzugsweise eine äußere Lauffläche der Wellenlagerung (9) innerhalb der Lagerhalterung (15) des Schutzmantels (10) liegt und insbesondere durch einen mit Preßsitz in die Lagerhalterung (15) eingesetzten Versteifungs- bzw. Lagerring (18) gebildet ist.

7. Rasenmäher nach einem der vorhergehenden Ansprüche, dadurch gekennzeichnet, daß der Schutzmantel (10) im Bereich der Lagerhalterung (15) am Außen- und/oder Innenumfang in Umfangsrichtung gewellt ist, insbesondere einen wellenförmigen Verlauf des Mantels aufweist.

8. Rasenmäher nach einem der vorhergehenden Ansprüche, dadurch gekennzeichnet, daß die Lagerhalterung (15) mit einem die Mähwelle (8) umgebenden, an dem Schutzmantel (10) insbesondere gegenüber der Ringschulter (16) abgestützten Ringdeckel (21) verschlossen ist, der vorzugsweise in den äußeren Lagerring (18) eingesetzt ist.

9. Rasenmäher nach einem der vorhergehenden Ansprüche, dadurch gekennzeichnet, daß die Mähwelle (8) den Boden (17) des Schutzmantels (10) durchsetzt und daß der Boden (17) vorzugsweise unmittelbar zwischen der Wellenlagerung (9) und einem als Innenläufer in einen Zahnkranz eines an der Lagerwange (3) gelagerten Laufrades (5) des Hand-Rasenmähers (1) eingreifenden Antriebsritzel (11) der Mähwelle (8) angeordnet ist.

10. Rasenmäher nach einem der vorhergehenden Ansprüche, dadurch gekennzeichnet, daß der Schutzmantel (10) mit einem Wellenlager der Wellenlagerung (9) bzw. mit dessen äußerer Lauffläche und dessen in einem Käfig (20) gefaßten Wälzkörpern (19) eine vormontierte Baueinheit zur Befestigung an der Lagerwange (3) bildet.

## Claims

1. Lawnmower with at least one bearing cheek (3), a mowing shaft (8), a bearing support (15), a shaft bearing (9) for the mowing shaft (8) and a winding protective casing (10) surrounding the mowing shaft (8) adjacent to the bearing cheek (3), characterized in that the protective casing (10) is formed by a sleeve casing projecting axially in freely overhanging manner from the shaft bearing (9) and forming between it and the mowing shaft (8) a radial free space.

2. Lawnmower according to claim 1, characterized in that the protective casing (10) is arranged in substantially fixed manner with respect to the bearing cheek (3) and the bearing support (15) is located on the bearing cheek (3) and preferably the bearing support (15) is at least partly formed by the protective casing (10) and/or the casing portion overhangs from the bearing support (15).

3. Lawnmower according to claim 1 or 2, characterized in that the protective casing (10) is constructed in one piece with the bearing support (15), particularly as a sleeve-like, deep-drawn sheet metal part and preferably blades (26) of the mowing shaft (8) engage axially over it and/or is open at the free end of its sleeve-like casing portion.

4. Lawnmower according to one of the preceding claims, characterized in that the protective casing (10) is constructed as a ring cup-shaped support shell in the vicinity of the bearing support (15) and is preferably formed by an end portion of the in particular cup-shaped protective casing (10).

5. Lawnmower according to one of the preceding claims, characterized in that the protective casing (10) has a reduced diameter in the vicinity of the bearing support (15) and in particular passes into the latter by means of a narrow ring shoulder (16) and preferably the protective casing (10) and the bearing support (15) are secured in their axial position relative to the bearing cheek (3) by a common stop, which is in particular formed by the ring shoulder (16) and engages on the inside of the bearing cheek (3).

6. Lawnmower according to one of the preceding claims, characterized in that the protective casing (10) or the bearing support (15) traverses the bearing cheek (3) in the vicinity of an opening (24) and in particular engages with press fit in said opening (24) and preferably an outer bearing surface of the shaft bearing (9) is located within the bearing support (15) of the protective casing (10) and is in particular formed by a stiffening or bearing ring (18) inserted with press fit into the bearing support (15).

7. Lawnmower according to one of the preceding claims, characterized in that in the vicinity of the bearing support (15) the protective casing (10) is circumferentially corrugated on the outer and/or inner circumference and in particular has a wavy casing configuration.

8. Lawnmower according to one of the preceding claims, characterized in that the bearing support (15) is closed with a ring cover (21) surrounding the mowing shaft (8) and supported on the protective casing (10) particularly with respect to the ring shoulder (16) and which is preferably inserted in the outer bearing ring (18).

9. Lawnmower according to one of the preceding claims, characterized in that the mowing shaft (8) passes through the bottom (17) of the protective casing (10) and in that the bottom (17) is preferably directly positioned between the shaft bearing (9) and a driving pinion (11) of the mowing shaft (8) engaging as an internal rotor in a toothed rim of a wheel (5) of the manual lawnmower (1) mounted on the bearing cheek (3).

10. Lawnmower according to one of the preceding claims, characterized in that the protective casing (10) with a shaft bearing element of the shaft bearing (9) or with its outer bearing surface and the roll bodies (19)located in a cage (20) forms a preassembled component for fixing to the bearing cheek (3).

## Revendications

1. Tondeuse à gazon comportant au moins une joue support (3), un arbre de tonte (8), une cage de palier (15), un palier (9) pour l'arbre de tonte (8) et une enveloppe de protection pouvant être enroulée (10) entourant l'arbre de tonte (8) au voisinage de la joue (3), caractérisée par le fait que l'enveloppe de protection (10) est constituée par une enveloppe du type manchon faisant saillie de manière axialement libre du palier (9) en formant entre elle-même et l'arbre de tonte (8) un espace radial libre.

2. Tondeuse à gazon selon la revendication 1, caractérisée par le fait que l'enveloppe de protection (10) est sensiblement fixe par rapport à la joue (3) et que la cage de palier (15) est disposée sur ladite joue (3), la cage (15) étant de préférence constituée, au moins partiellement, par l'enveloppe (10) et/ou la section formant l'enveloppe faisant saillie librement de ladite cage (15).

3. Tondeuse à gazon selon la revendication 1 ou 2, caractérisée par le fait que l'enveloppe de protection (10) est réalisée de manière à constituer une seule pièce avec la cage de palier (15), en particulier sous la forme d'un morceau de tôle en forme de manchon réalisé par emboutissage profond, et qu'elle est de préférence chevauchée axialement par les couteaux (26) de l'arbre de tonte (8) et/ou qu'elle est ouverte à l'extrémité libre de sa section constituant l'enveloppe en forme de manchon.

4. Tondeuse à gazon selon l'une des revendications précédentes, caractérisée par le fait que l'enveloppe de protection (10) est réalisée au voisinage de la cage de palier (15) à la manière d'une coque de support en forme de godet annulaire, et qui est constituée de préférence par une section d'extrémité de l'enveloppe de protection (10) en forme de godet.

5. Tondeuse à gazon selon l'une des revendications précédentes, caractérisée par le fait que l'enveloppe de protection (10) dans la zone de la cage de palier (15) présente un diamètre réduit et en particulier qu'entre les deux zones enveloppe (10) d'une part, et cage de palier (15) d'autre part, se trouve un étroit épaulement annulaire (16), tandis que de préférence l'enveloppe (10) et la cage de palier (15) sont assurées dans leur position axiale par rapport à la joue support (3) par une butée commune qui est formée en particulier par ledit épaulement annulaire (16) et vient s'appliquer sur la face intérieure de la joue (3).

6. Tondeuse à gazon selon l'une des revendications précédentes, caractérisée par le fait que l'enveloppe de protection (10) ou la cage de palier (15) traverse la joue (3) dans la zone d'un orifice (24) et en particulier s'insère sous une certaine pression dans cet orifice (24), tandis que de préférence une face de roulement extérieure du palier d'arbre (9) se situe à l'intérieur de la cage de palier (15) de l'enveloppe de protection (10) et est formée en particulier par une bague (18) formant raidisseur et palier, insérée dans la cage (15).

7. Tondeuse à gazon selon l'une des revendications précédentes, caractérisée par le fait que l'enveloppe de protection (10) est ondulée dans la zone de la cage de palier (15) sur son pourtour extérieur et/ou intérieur dans le sens périphérique, en particulier que cette enveloppe présente une extension ondulée.

8. Tondeuse à gazon selon l'une des revendications précédentes, caractérisée par le fait que la cage de palier (15) est fermée par un couvercle (21) de forme annulaire entourant l'arbre de tonte (8) et prenant appui sur l'enveloppe de protection (10) en particulier par rapport à l'épaulement annulaire (16), ledit couvercle (21) étant inséré dans la bague de palier extérieur (18).

9. Tondeuse à gazon selon l'une des revendications précédentes, caractérisée par le fait que l'arbre de tonte (8) traverse le fond (17) de l'enveloppe de protection (10), que le fond (17) est disposé de préférence directement entre le palier d'arbre (9) et un pignon d'entraînement (11) de l'arbre de tonte (8) s'engrenant, pour servir de pignon intérieur, dans une roue dentée d'une roue de déplacement (5) de la tondeuse à gazon manuelle (1), roue (5) montée-sur la joue (3).

10. Tondeuse à gazon selon l'une des revendications précédentes, caractérisée par le fait que l'enveloppe de protection (10) constitue avec un roulement du palier d'arbre (9) ou avec sa face de roulement extérieure et ses galets (19) contenus dans une cage (20), une unité de construction montée d'avance, destinée à être fixée sur la joue support (3).
